# EUROPEAN PATENT APPLICATION

(11) **EP 4 702 832 A1**
(43) Date of publication of application: **04.03.2026**
(21) Application number: 25198670.9
(22) Date of filing: 28.08.2025
(51) Int. Cl.: A01D 46/26

(54) **COMBINED DEVICE FOR HARVESTING AND DEFOLIATING OLIVES**

(30) Priority: 29.08.2024 IT 202400019432
(71) Applicant: Dal Bosco, Luca, 37031 Illasi (VR) (IT)
(72) Inventor: Dal Bosco, Luca, 37031 Illasi (VR) (IT)
(74) Representative: Münchow, Vera Ute Barbara

(57) **Abstract**

The invention relates to a combined device (10) for harvesting, defoliating and preferably also transporting olives or dried oily fruit. In this regard, a case (12) is provided for containing olives or dried oily fruit, equipped at its front with a defoliation system (16, 20) inserted under an inclined front wall (22) of the case that can be extended with a supplementary wall (23). The combined device may comprise an elevating element (44, 46) on which the case is fixable, in a tiltable manner, and from which a support (42) is, alternatively, lowerable to accommodate bins (50) with olives or with dried oily fruit. In integrated form, the combined device further comprises net spreading and winding elements (166). A related process is also described.

## Description

### TECHNICAL FIELD

The present invention relates to a machine for harvesting, defoliating and preferably also for transporting olives, in particular for harvesting olives by means of a traditional net arranged below the olive trees. The machine according to the invention, as well as the relative harvesting and defoliating process, are applicable not only to olives but also to dried oily fruit, such as hazelnuts, pistachios or almonds.

### BACKGROUND OF THE INVENTION

The harvesting of olives using nets is a manual harvesting technique used since antiquity, still very widespread today, which involves knocking the drupes so that they fall to the ground. The fruits will then be harvested quickly thanks to the nets arranged beforehand under the foliage of the plants. Various forms of systems for knocking are known on the market, such as harvesters/beaters, grazers or shaker hooks. Harvesting on a net allows the olives to be harvested, reducing the risk of injury. Subsequently, the olives must be defoliated and transported to the oil mill. To have a daily harvest yield that is also maximised in terms of oil quality, it is necessary to carry out these steps gently and possibly in a short time, preferably on the same day as the harvest.

The various steps of harvesting, defoliation and transport require a lot of manual intervention and various auxiliary devices and related time-consuming tasks and work efforts to complete the preparation of the olives from the tree to the oil mill.

A similar harvesting technique onto nets arranged under the plants is applied for dried oily fruit. Document EP 1 574 123 A1 describes a device equipped with an inclined grid that can be fed with olives and leaves collected with a net or fabric, wherein olives fall through the grid while leaves remain on it.

### DISCLOSURE OF THE INVENTION

The object of the invention is to overcome the aforementioned drawbacks and to propose a device that is able to speed up the separation of olives or, alternatively, dried oily fruit from the net and the defoliation of these. A further object of the invention is to propose a device that is less complex and compact that is capable of combining various steps of processing olives or dried oily fruit. Another object of the invention is to find a simple device that also allows simplifying the transport of defoliated fruits.

In a first aspect of the invention, the object is achieved by a combined device for olive or oily dry fruit harvesting and defoliating comprising:
(a) a support and a case mounted on said support wherein said case has a bottom, two side walls, a rear wall and a front wall inclined with respect to the bottom, wherein the inclination with respect to the bottom preferably corresponds to an angle of less than or equal to 45°;
(b) a gripping device for pulling a net through it preferably arranged on the upper edge of said rear wall;
(c) optionally a rod mounted, preferably in a rotatable manner, transversely to said two side walls;
(d) a supplementary wall which is in a first position at least partially overlapping with/insertable into the inclined front wall and which in a second position can be positioned as an extension of said front wall inclined towards the inside of said case; and/or
   an upper closure suitable for at least partially closing the case and representing, when closed, an extension of the inclined front wall or the supplementary wall, if present; and
(e) in the compartment located between said inclined front wall and said bottom, a system for defoliating olives or oily dried fruit, wherein the compartment is preferably separable from the rest of the case.

It is also conceivable that inclinations of the front wall relative to the bottom could exceed 45°. The fact that the front wall is inclined implies two variants: a front wall with a fixed inclination or a front wall that can be inclined from a vertical or horizontal position with respect to the bottom of the case into an inclined position with respect to the bottom of the case. The front of the case is defined as the part from which the net with the harvested olives is inserted during use.

The superimposability of the supplementary wall on the front wall also includes a roll-up supplementary wall. It is obvious that the supplementary wall can be in the retracted state above or below the inclined front wall.

Preferably, the supplementary wall can be inclined/is inclined relative to the inclined front wall. An inclination of the supplementary wall ensures better containment of the harvest in the case above the defoliation compartment, in particular with an inclination towards the inside of the case.

A gripping device for pulling a net through it can be realized in various forms. **In** a preferred embodiment, this may be a pair of motorized wheels arranged adjacent to each other wherein the wheels are advantageously in contact; a variable distance between said wheels is also conceivable to possibly adapt the distance to nets with different thicknesses or to the wear of the wheels. Alternative solutions provide, for example, instead of wheels cylinders with a frusto-conical upper part or two parallel rollers configured to tighten hydraulically. The person skilled in the art with their general knowledge easily identifies other gripping systems suitable for the purpose.

The compartment being separable from the rest of the case allows the case to be filled with olives without parts of the defoliation system being already affected before it is operated. Defoliation preferably takes place with the case tilted and raised to take advantage of gravity for feeding the defoliation system.

The provision of a supplementary wall and/or an upper closure and the placement of the defoliation system in the aforementioned compartment offers a compact and simple solution for defoliating the olives or dried oily fruit immediately after transferring them from the net to the case, without having to pour them into a separate defoliating machine that would have required a further transfer of the olives or dried oily fruit with respective losses of time, further work efforts and risks to the integrity of the fruits.

The alternative to the supplementary wall, or rather its integration, the upper closure, is advantageously a roll-up wall arranged transversely to said side walls, in particular in the area of the rear wall of the case. Positions shifted further towards the front part of the case are also conceivable. This roll-up wall can easily serve as an extension of the front wall and/or the supplementary wall by joining to the front wall and/or the supplementary wall during its closure. The roll-up wall is advantageously rolled up/rollable on a rod that may be present together with other rods described in this description, but also in replacement of other rods. The two alternatives under point (d) can be summarised under the more general concept of an additional wall that acts as an extension of said front wall inclined towards the inside of said case and closes the case at least partially above the compartment containing the defoliation system to prevent fruit and/or leaves from spilling out when the case is tilted. Advantageously, the invention provides five embodiments for the defoliation system. **In** the first variant, the defoliation system comprises:
(e-1) a grid connecting the inclined front wall to the bottom of the case, wherein the grid is optionally oscillating;
(e-2) an element for producing an air flow preferably arranged at one end of said compartment;
(e-3) a tubular or funnel-shaped element or a hole connected to the outside of the case and preferably arranged at the other end of said compartment;
(e-4) an opening preferably applied in said bottom of said case within said compartment.

In the second variant, the defoliation system comprises:
(e-i) a transport system, preferably arranged at the height of the upper edge of the inclined front wall;
(e-ii) a rotatable drum with a lattice wall placed below the transport system and feedable therefrom, wherein the drum is open at its ends, one end of which is connected to the outside;
(e-iii) an element for producing an air flow preferably placed on one end of said compartment and suitable for sending the air flow into the drum and preferably under the drum;
(e-iv) an opening preferably applied in said case bottom within said compartment.

In the third variant, the defoliation system comprises:
(e-a) a plurality of preferably helical rollers parallel to each other and rotatable, preferably arranged at the height of the upper edge of the inclined front wall, wherein the rollers are inclined towards an outlet connected to the outside of the case;
(e-b) optionally a rotatable paddle wheel positioned so that branches and twigs can be removed from the lower end of the plurality of rollers towards the outlet;
(e-c) an element for producing an air flow suitable for sending an air flow below the plurality of rollers towards the outlet;
(e-d) an opening preferably applied in said case bottom within said compartment.

**In** the fourth variant, the defoliation system comprises
(d-a) a double screw or double conveyor belt unit that are movable in opposite senses, but which are arranged along the same direction;
(d-b) two rotatable lattice wall drums placed on the two ends of the double screw or double conveyor belt unit;
(d-c) an element for producing an air flow capable of pushing the air in the direction of the two drums and placed under the double screw or double conveyor belt unit;
(d-d) two side outlets in the case in which the two drums end and which have a larger cross-sectional area than the two drums;
(d-e) an opening in the bottom of the case.

In a fifth variant, the defoliation system comprises:
(e-a) an inclined plate, optionally vibrating, which extends one of two inclined side walls protruding towards the inside of the case;
(e-b) preferably a slit suitable for closing the distance between the inclined plate and the lower end of the inclined side wall not extended by an inclined plate;
(e-c) an element for producing an air flow suitable for directing the air flow towards the material which, during use, falls from the inclined plate;
(e-d) at least one side outlet in the case in which said element for producing an air flow is suitable for pushing the air towards said at least one outlet;
(e-e) an opening in the bottom of the case.

The inclined plate may have a continuous surface or it may also be in the form of a very fine mesh grid that prevents leaves from passing through. The fact that the plate is inclined rather than horizontal allows leaves and fruit to slide into the air flow for separation. Advantageously, the slit is also inclined and no longer horizontal.

The double drum variant speeds up the defoliation process.

Respectively, the grid and the transport system, in particular in the form of at least one conveyor belt or a screw system, are adapted to separate the defoliation system and therefore said compartment from the rest of the case and therefore from the space for containing the olives or dried oily fruit, making it possible to contain, in a very compact way, a defoliation system in the harvest case and at the same time to defoliate the olives or dried oily fruit in the same harvest device without further "decanting" for further processing. Advantageously, a lateral arrangement of the connection of the compartment with the outside and an opening for the outlet of olives or dried oily fruit at the bottom of the case makes it possible to direct leaves and fruits after defoliation easily in two different directions. An oscillating grid facilitates the passage of fruits and leaves into the compartment below. An air flow that affects both the inside of the drum and the part below also allows the leaves that have fallen from the drum into the area below to be lifted and expelled. Preferably, in this regard, an outlet is provided for the leaves below the end of the drum connected to the outside.

In the case of the helical roller system, olives or nuts pass easily between the rollers, branches and twigs remaining on the rollers will preferably be moved outwards with the help of the paddle wheel, while leaves crossing the rollers are lifted by the air flow and moved towards the outlet.

In a preferred variant of said first embodiment of the defoliation system the grid is connected to a second grid and the grids are arranged perpendicularly or obliquely therebetween. A drive device, such as a piston motor, is fixed to the second grid and moving this causes the first grid to move, as well.

In a preferred variant of said second embodiment of the defoliation system, said transport system comprises a first conveyor belt or screw system, which acts as at least a partial separator between said compartment and the rest of the case, and a shorter second conveyor belt or screw system which is arranged partially under said first conveyor belt or screw system and protrudes therefrom, wherein the second conveyor belt or screw system is advanceable in the direction of the drum and the first conveyor belt or screw system is advanceable in the opposite direction. The principle of two conveyor belts or two screw systems allows, on the one hand, the compartment to be separated from the rest of the case, and on the other hand, the olives to be introduced into the drum in a simple manner. Advantageously, the shorter conveyor belt or screw system travels at a higher speed than the longer conveyor belt or screw system, so as not to be overloaded with olives or dried oily fruit. Other transport systems are also conceivable. An alternative for the transport system of variant (B) comprises a single conveyor belt or a single screw conveyor that feeds said drum and protrudes at least partially into said drum; and advantageously a slit that separates said compartment from the rest of the case. The slit preferably connects two inclined side walls of the case.

In the variants with the drum and with the helical rollers, advantageously, below the drum or the helical rollers an inclined plane is arranged which extends towards said opening for the outlet of olives or dried oily fruit. The inclined plane makes it easier to direct the fruits to the outlet by exploiting the force of gravity. In the embodiment with the oscillating grid the inclined plane which in this case corresponds to the bottom of the case, is advantageously realized with the progressive tilting of the case.

Preferably, the case is provided with said rod mounted transversely with respect to the two side walls of the case. The rod can be used to conveniently stretch a net while it is being pulled through the gripping device for pulling the net. In this regard, advantageously, at least one arc or other protrusions can be provided centrally to the rod to further assist the spreading of the net and the easy introduction into the gripping device. The rod is rotatable, and the rotation is driven by a motor placed on one side wall of the case in which one end of the rod is inserted, while the other end is idly housed in a housing placed on the opposite side wall. The rod could also be fixed in a manner, that it is guaranteed that the rod does not rotate towards the gripping device remaining stationary or turning in the opposite sense (towards the inclined wall).

In another advantageous embodiment of the invention, which represents a first winding system of the net, said rod is mounted translatably along the side walls of the case. This allows the rod to be brought closer to the gripping device to facilitate the introduction of the net or to move it away from the gripping device when the net must be wound on the rod. In this regard, the upper edges of the side walls advantageously comprise, at least over a section, guides and the motor and housing are made as complementary carriages adapted to slide along the guides.

At the outlet of the net gripping device, for example, the net may be manually positioned under the olive or oily dried fruit plant to continue harvesting.

Advantageously, the gripping device for pulling the net is arranged protruding only towards the inside of the case, in order not to obstruct the rear of the case when it is to be mounted on a tractor or the like.

**In** a preferred variant of the invention, an elevating mechanism is provided for elevating the gripping device into an upright position. This allows the space above the case to be freed to accommodate rollers with wound nets as will be illustrated below.

**In** a very advantageous embodiment, the combined device according to the invention further comprises an elevating element in turn comprising two frames which in a first position are at least partially overlappable and in a second position are positionable one above the other (i.e. one raised with respect to the other) wherein said support of said case is fixable/fixed by means of first fixing means on the liftable frame which is also provided with a support, in particular a fork, which is both positionable in an essentially coplanar shape with respect to the frame on which it is fixed and tiltable/tilted with respect to its frame, in particular of about 90°.

This embodiment allows the support to be fixed to the case by means of respective fixing means on the elevating frame to raise the case so that it can be tilted and the olives or dried oily fruit can be lowered into the compartment provided for defoliation and subsequently into a bin placed below the tilted case. Furthermore, the elevating element can be fixed with the other frame on a tractor or other vehicle. The support, in particular the fork, is located during the assembly of the case advantageously between the two frames and after the disassembly of the case can be tilted to also allow the transport of the bin with olives or dried oily fruit. The elevating element extends the functionality of the combined device beyond the harvest and defoliation of olives or nuts to the transport of fruits in a compact and simple way without having to change the device.

**In** another embodiment variant of the invention, chutes are provided on the side walls of the case suitable to channel olives or dried oily fruit and leaves towards the defoliation system. These chutes can be inclined walls that then together with the grid or the transport system or the plurality of helical rollers and the supplementary wall delimit the containment space during and after emptying the net into the case.

Preferably, the combined device according to the invention further comprises a closing element for separating said defoliation system and the respective compartment from the rest of the case. The closure element may be a slit.

In one embodiment of the invention, the case is tiltable with respect to said support. This allows the case to be brought into a position to slide olives/dried oily fruit and leaves into the defoliation system and to pull the olives or dried oily fruit by gravity out of it. Advantageously, the slit, case, and grid are operable with actuators known in the art, e.g. hydraulic piston motors.

A particularly preferred embodiment of the invention is represented by a combination of the subject matter of claims 1, 2, 5, 6, 7 and 9. The optimal embodiment involves harvesting the olives or nuts in a horizontal position of the case, performing the defoliation in a tilted and raised position of the case, then transporting the olives or nuts with the elevating element of the combined device and to, as will be illustrated below, spread and wrap the nets respectively before and after harvesting and defoliation.

In a preferred embodiment of the invention, the combined device according to the invention further comprises a mechanism for rotating said case on the horizontal plane. This mechanism could be a combination of a toothed ring gear and pinion arranged under the case on the support. Other mechanisms are conceivable, for example with non-circular, but semi-circular ring gears or similar systems.

The rotatability of the case makes the device more versatile and adaptable to different working conditions (e.g., different positions of nets in the olive grove).

In a preferred embodiment of the invention, which represents a second winding system, the combined device for harvesting and defoliating olives or dried oily fruit further comprises, preferably in the front of the case and on the outer side of each side wall of the case, retractable and extendable arms configured to be able to accommodate a rod with a wound net in the extracted position transversely to the side walls of said case. This configuration facilitates the spreading of the net to prepare the processing site. Advantageously, one of said arms can be equipped with a motor, preferably the same motor that drives the rod positionable near the net gripping device, to rotate the rod. In this way, the rod inserted between said two arms also serves to wind nets after the harvest is completed. The inserted rods therefore have the double function of winding and spreading the nets.

Advantageously, said upper side edges of said case are provided with one or more pairs of recesses on the opposite edges to be able to accommodate rods with wound nets in the event that the combined device according to the invention is not used.

With the device according to the invention, harvesting, defoliation and preferably also the transport of the olives or nuts, or even the spreading and/or winding of the nets, can be carried out. In other words, a preferred device would comprise within it:
- a net spreading-net winding system, realized in two alternative shapes, respectively with extendable arms, a motor and a rod or with a rod that can be moved along the upper edges of the side walls of the case;
- a loading system that feeds the gripping device of the net to load the olives or dried oily fruit, realized in particular with the gripping device and a rod;
- a defoliation system, in particular realized with a fan, tilting, and one of the systems chosen from oscillating grid, drum, vibrating plate or series of helical rollers; and
- a transport system, realized in particular with the elevator.

A further aspect of the invention relates to the use of the combined device for the processing of olives or dried oily fruit harvested by net.

In a preferred variant of the invention, the combined device is further equipped with a shelling system. In the case of oily dried fruit, such a shelling system can be used to separate and remove the green shells of almonds, hazelnuts or similar.

Another aspect of the invention relates to fitting a tractor or other towing vehicle with said combined device. Still another aspect of the invention is a transport system comprising said combined device and a towing vehicle, preferably reversibly connected to each other.

A final aspect of the invention relates to a process for harvesting and defoliating olives or dried oily fruit, comprising the following steps:
(I) provision of a combined device according to the invention;
(II) harvesting olives or dried oily fruit on a net arranged under an olive tree or a plant producing oily dried fruit, wherein the net is preferably arranged with said combined device or manually;
(III) pulling the net through the gripping device for pulling a net so as to pour the olives or oily dried fruit into the case, preferably by separating the compartment from the rest of the case and preferably with the case in a horizontal position;
(IV) extraction of the supplementary wall as an extension of the inclined wall and/or closing of the upper closure;
(V) tilting of the case;
(VI) opening of the compartment when it is closed and operation of the defoliation system with ejection of the leaves and collection of the olives or oily dried fruit, preferably in bins arranged under an opening in the compartment;
   and optionally
(VII) disassembling of the case from the support and, if present, tilting of the support, in particular of the fork, and positioning of at least one bin of olives or dried oily fruit on the support and preferably transport of said at least one bin on a trailer and/or to the oil mill;
   and optionally
(VIII) winding the net on a rod, if present.

The tilting of the case is advantageously carried out with a tilting system, for example with pistons, arranged between the support and the case and preferably assisted by the elevating element according to the invention.

The rod used in step (III) for stretching the net is preferably provided with at least one protrusion, such as an arc; the rod used in step (II) and/or (VIII) is advantageously a simple rod. Where not imposed by a logical succession, the steps must not take place in the order indicated, they may, for example, swap places between steps (I) and (II) or steps (VII) and (VIII) or steps (V) and (VI). The case advantageously occupies a horizontal position when pulling the net and also when spreading and winding the net.

The features and advantages described for one aspect of the invention may be transferred *mutatis mutandis* to the other aspects of the invention.

The industrial applicability is obvious since the invention manages to combine in a very simple and compact way in a single device the functions of harvesting, defoliation and preferably also of transporting olives or nuts. With a single tool it will be possible to complete the operations that in the context of Italian olive-growing or harvesting of dried oily fruit is still largely carried out manually, such as pulling the nets, putting olives or dried oily fruit with leaves into boxes, transporting these out of the olive grove or the plantation more generally, defoliation, loading into the bins for subsequent transport to the oil mill or for subsequent processing, significantly reducing time, work efforts and costs, enhancing the value of the extra virgin olive oil produced, or the fruits themselves and the producer's income, but also by favouring the restoration of abandoned olive groves and/or the creation of new olive groves or new plantings for the production of dried oily fruits.

The objects and advantages will be further highlighted in the description of preferred examples of embodiments of the invention given by way of non-limiting example only.

Variant and further features of the invention are the subject matter of the dependent claims. The description of preferred embodiment examples of the various aspects of the invention is given, by way of example and not of limitation, with reference to the attached drawings. In particular, unless otherwise specified, the number, shape, size, configurations and materials of the systems described and of the individual components may vary, and equivalent elements may be applied without deviating from the inventive concept.

### BRIEF DESCRIPTION OF THE DRAWINGS

- Fig. 1: shows in a perspective view a detail of a first exemplary embodiment of a combined device for the harvest, defoliation and transport of olives traditionally harvested with a net.
- Fig. 2: shows the drawing in Figure 1 in another perspective.
- Fig. 3: shows the combined device of Figure 1 with complete case in a view in the direction of the pulling of the net.
- Fig. 4: shows the combined device of Figure 3 in a perspective view.
- Fig. 5: shows a side section of the combined device of Figure 3 mounted on a support.
- Fig. 6: shows the combined device of Figure 5 mounted on the elevator of a tractor.
- Fig. 7: shows the transformation of the elevator to be applied to the tractor from a support for the case of the combined device into a forklift for the transport of bins of olives.
- Fig. 8: shows the arrangement of the case of the device combined with the winding of nets by a translation of a rod along the side walls.
- Fig. 9: shows in a cross-sectional view a detail of a second embodiment of the defoliation system of a combined device for the harvest, defoliation and transport of olives harvested traditionally with a net.
- Fig. 10: schematically illustrates the exemplary embodiment of Figure 9 in another view.
- Fig. 11: shows in a perspective view the case according to Figure 4 integrated with a net spreading-net winding system with extendable arms at the front of the case.
- Fig. 12: shows the integrated case of Figure 11 in a perspective front view.
- Fig. 13: shows in more views a detail of a third embodiment of a defoliation system of a combined device for the harvest, defoliation and transport of olives harvested traditionally with a net.
- Fig. 14: shows two views of a further embodiment example of the combined device according to the invention.
- Fig. 15: shows a perspective view of a combined device according to the invention with a case rotation system.
- Fig. 16: illustrates a fourth embodiment example of the defoliation system.
- Fig. 17: illustrates a fifth embodiment example of the defoliation system with a single screw conveyor as an alternative to the second embodiment example.
- Fig. 18: illustrates a sixth embodiment example of the defoliation system.

### DESCRIPTION OF PREFERRED EMBODIMENT EXAMPLES

The description of the drawings refers to the processing of olives, but is transferable to the processing of dried oily fruit.

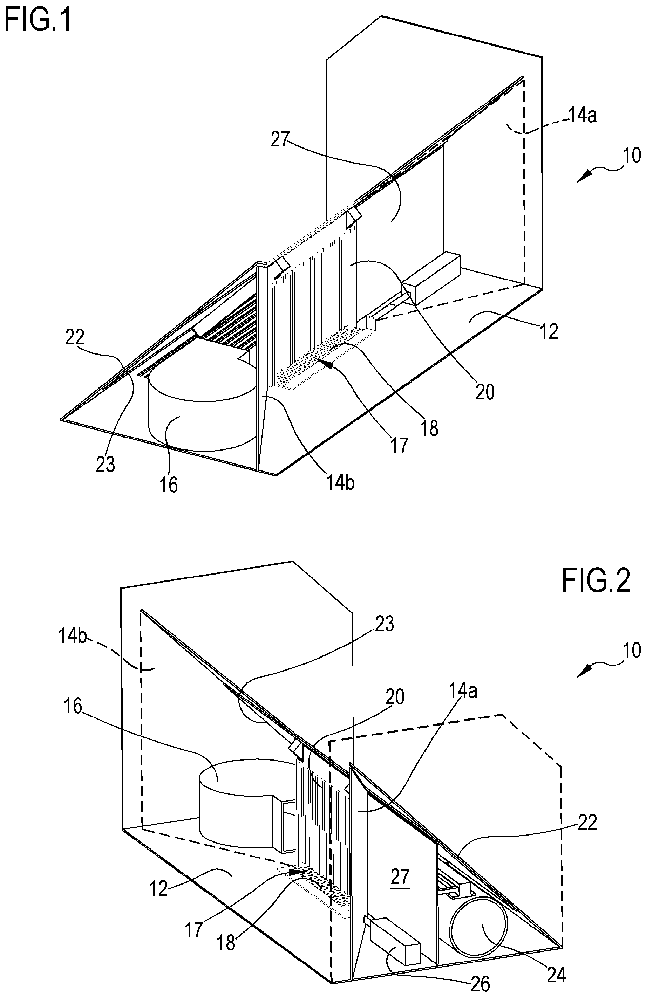

Figure 1 shows the front part of a combined device **10** for harvesting, defoliating and transporting olives harvested using a net. The numeral **12** indicates a case (here only partially shown) which is provided on both sides with wedge-shaped chutes **14a** (represented in dotted form) and **14b** to facilitate the sliding of olives and leaves found after the removal of the harvest net into the case **12** towards the grid **20.** The grid **20** is connected with a second grid **18** which is movable to move the first grid **20** back and forth or to swing it. The inclined wall **22** creates a compartment inside the case **12** into which olives and leaves fall through the grid **20.** The fan **16** emits an air flow to lift and push the leaves towards the other side of the case **12.** There is also a second wall **23** superimposed on the inclined wall **22** which can be extracted as an extension of the wall **22** to better contain olives and leaves during a tilting of the case **12.** A slit **27** may close the grid **20.** A slot **17** without a grid is located between the two grids **18, 20.** Fins (not visible) are arranged on the grid **20** and project towards the inside of the case **12.** The vertical fins prevent the accumulation of any branches and twigs. The slot **17** at the lower part of the grid **20** in a horizontal sense prevents piling up of olives, leaves and branches so that the harvested material will be selected on the grid extension in the compartment with the action of the fan **16** (not visible). The grid **18** also has a function for handling the harvested material. The orientation of the parallel bars of the grids **18** and **20** between one grid with respect to the other may vary, more effective orientations are easily identified by the person skilled in the art. The slot **17** and/or the fins may advantageously be present in all the various embodiments of the invention.

Fig. 2 shows the drawing of Figure 1 in another perspective showing the presence of a piston motor **26** adapted to move the second grid **18** and consequently the first grid **20** to move the latter back and forth and facilitate the fall of the olives and leaves. The airflow out of the fan **16** lifts and pushes the leaves, which are lighter than the olives, towards the cylinder **24** (which may alternatively also have a funnel shape) from which the leaves leave the combined device **10.** The slit **27** can be moved by a motor (not shown).

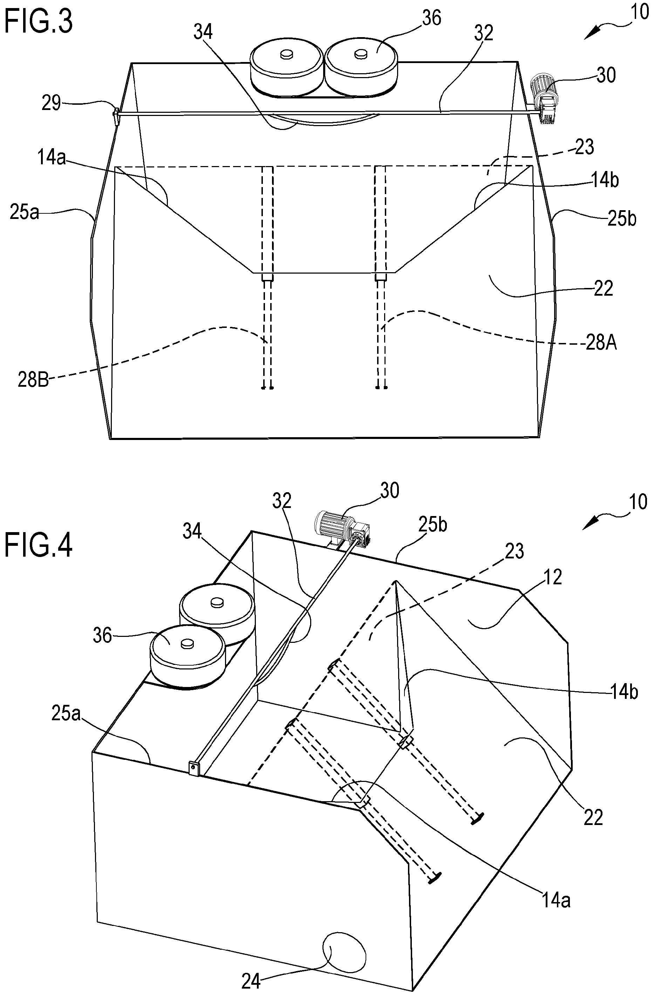

Fig. 3 shows the combined device **10** of Figure 1 with a complete case **12** in a view in the direction that the net is pulled (not shown). Two motorized wheels **36** are arranged on the rear wall of the case **12** and project inwardly of the case **12.** Between these two wheels **36** are inserted the respective flaps of a net with olives. The rod **32** rotatable by the motor **30** facilitates the entry of the net between the wheels **36** to pass the net (not shown) between them and pour the olives (and leaves) into the case **12.** The curved element **34** facilitates stretching of the net. The rod **32** at one end is rotatably fixed to the motor **30** and at the other end is fixed on a slide **29.** The motor **30** and the slide **29** are slidably mounted on the edges (or respective guides) **25a** and **25b** of the side walls of the case **12.** This allows the element inserted between the motor **30** and the slide **29** (here the rod **32)** to be moved towards or away from the rear wall of the case **12** depending on the processing to be carried out. The supplementary wall **23,** which is an extension of the inclined wall **22,** is also noted in dotted form. The supplementary wall **23** in the retracted state is located inside or below/above the inclined wall **22** and can be extracted in a telescopic manner with respective piston motors **28A** and **28B** or, alternatively not shown, by tilting it by means of respective hinges arranged between two sides of the two walls **22, 23** to prevent olives and leaves from exiting the case **12** when the latter is tilted during defoliation. Figure 4 shows the combined device **10** of figure 3 in a perspective view. The supplementary wall **23** in the extracted state extends beyond the side chutes **14a** and **14b** and the outlet **24** of the leaves from the compartment created between the bottom of the case **12** and the inclined wall **22** is noted.

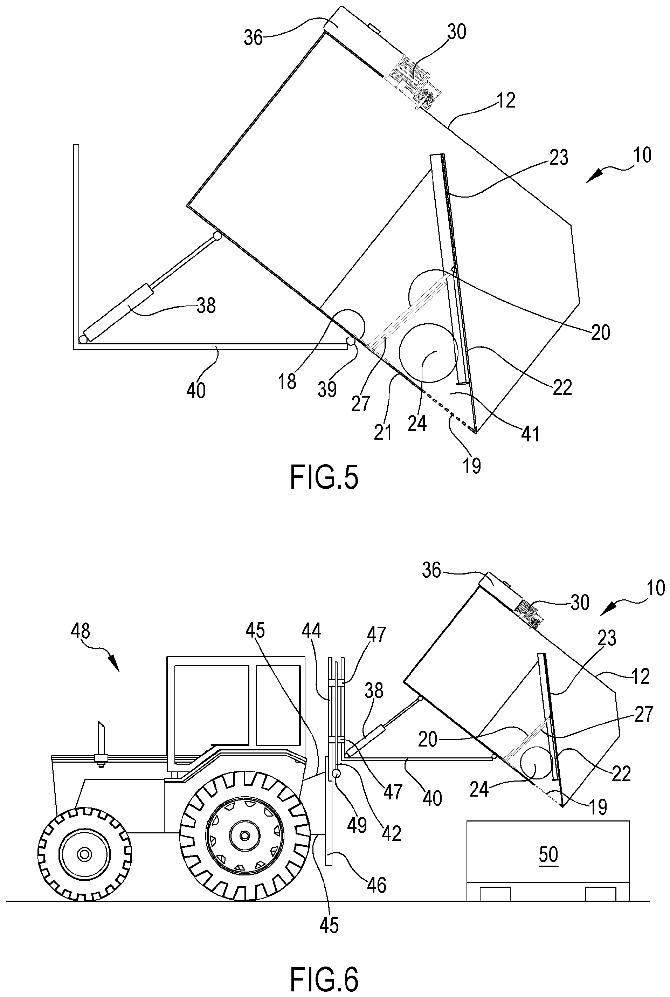

Fig. 5 shows in side section the combined device **10** of Figure 3 with support **40.** It is well noted that the wheels **36** are located above the containment space of the case **12** so as not to obstruct the rear wall and not to hinder attachment to, for example, a tractor. The case **12** is mounted on a support **40** and is tiltable with a piston motor **38** around the fulcrum **39.** The overlap of slit **27** and grid **20** is noted before starting the defoliation and the extension of wall **23** with respect to wall **22.** The grid **18** that moves the grid **20** is resting on the bottom of the case **12.** The compartment **41** created between the grid **20,** the inclined wall **22** and the bottom **21** of the case **12** closed laterally by the side walls of the case **12** is clearly identifiable. The cylinder **24** is also noted for the outflow of the leaves, while the opening (for example in a trellis) **19** is provided for the outflow of the olives.

Fig. 6 shows the combined device of Figure 5 mounted on the elevator of a tractor **48.** The elevator consists of a first plate **44** and a second plate **46.** The second plate **46** is mounted with relative fixing means **45** on the tractor **48.** The second plate **44** is movable between a position covering the plate **46** and a raised position (as shown in Figure 6). The support **40** of the case **12** is mounted with respective second fixing means **47** on the plate **44.** The case **12** is tilted by the piston motor **38** during defoliation (after opening the slit **27)** in which the leaves come out laterally pushed by the fan **16** (not shown in the figure) from the cylinder **24,** while the olives fall downwards through the opening **19** into a bin **50.** A fork **42** tiltable around a fulcrum **49** is arranged between plate **44** and support **40.**

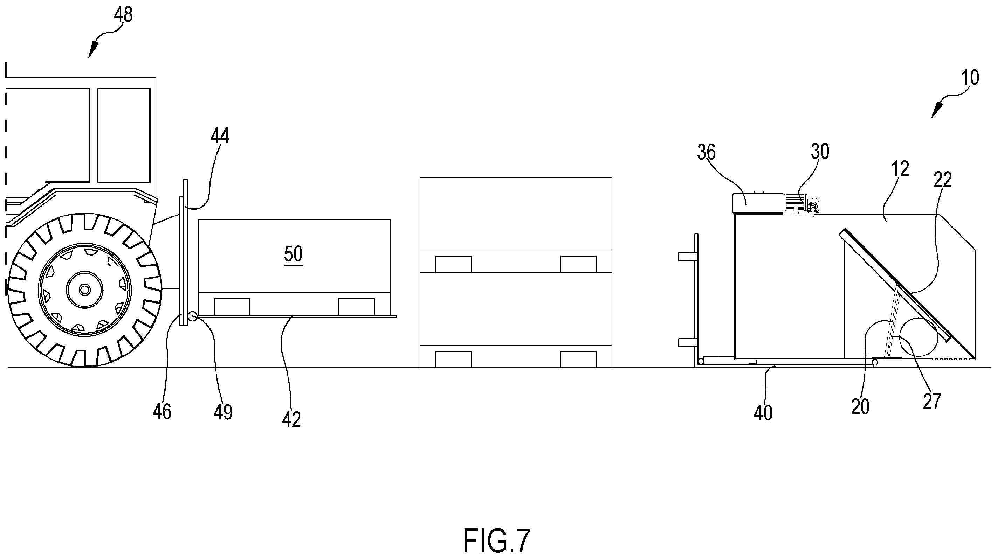

Fig. 7 shows the transformation of the elevator **44, 46** to be applied to the tractor **48** from a support for the case **12** of the combined device **10** into a kind of forklift for the transport of olive bins **50.** The support **40** with the case **12** was detached from the plate **44** which was retracted and positioned behind the other plate **46.** The fork **42** has been tilted by 90° and thus forms a support for accommodating one or more bins **50** with olives.

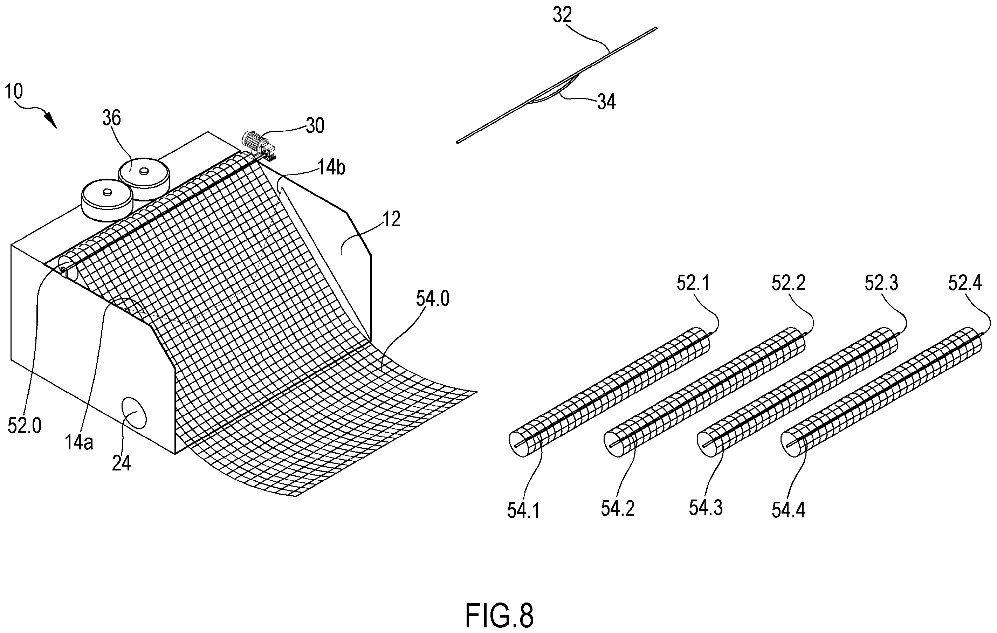

Fig. 8 shows the arrangement of the case **12** of the combined device **10** to the winding of nets **54.x** by a translation of a rod along the side walls. The rod **32** with arc **34** for feeding the wheels **36** has been rearranged by a simple rod **52.0** on which, with the help of the motor **30,** the nets **54.x** can be wound. When the harvest is finished, the user wraps each net **54.x** on a separate rod **52.x.**

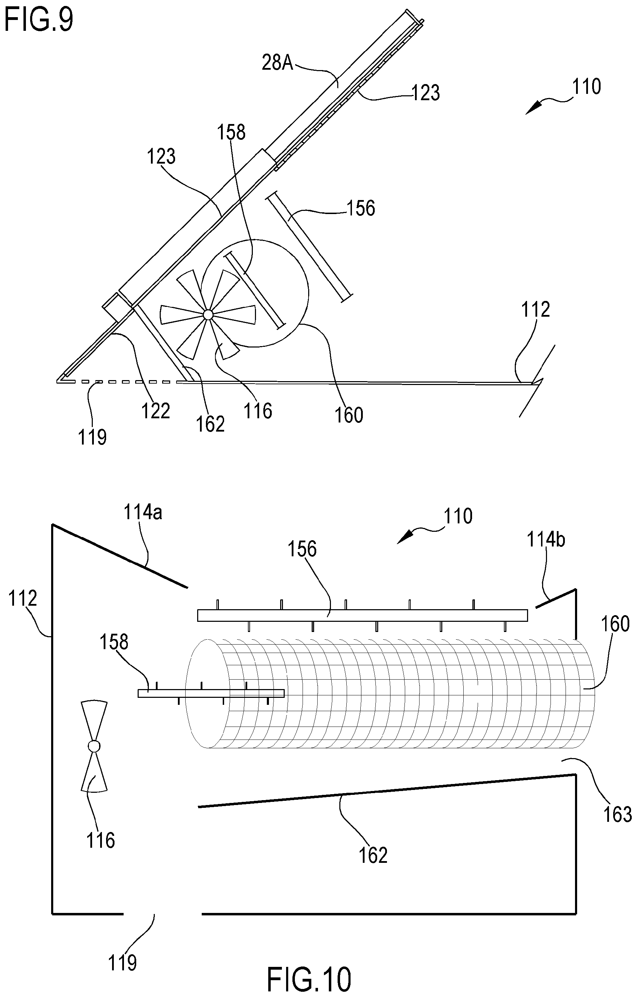

Fig. 9 shows in a sectional view a detail of a second embodiment of a combined device **110** for the harvest, defoliation and transport of olives harvested traditionally with a net. With respect to the exemplary embodiment that is the object of the previous figures, the defoliation system changes which in this case does not comprise an oscillating grid, but a system with a rotating drum **160** and conveyor belts **156** and **158.** The defoliation system will also be described in connection with Figure 10 which shows it schematically in another view. Here again chutes **114a, 114b** are provided for directing leaves and olives towards the defoliation system comprising a first conveyor belt **156** which moves to the left (Figure 10) and drops olives and leaves (not shown) onto the belt **158** that is shorter and faster than the belt **156** for transporting olives and leaves into the drum **160.** The shorter belt **158** moves to the right. The drum **160** may be provided inside with spirals and/or a further grid drum (not shown) to promote the separation of olives and leaves. A fan **116** pushes an air flow to the right (Figure 10) and affects both the inside of the drum **160** and the space between the drum **160** and an inclined plane **162** to push leaves dropped from the drum and not already separated in the drum towards the opening **163.** The olives exiting the drum **160** under the force of gravity and centrifugal force slide along the inclined plane **162** in the direction of the outlet **119** from the case **112.** Apart from the defoliation system and the constructively adapted chutes **114a** and **114b,** the combined device **110** corresponds to the combined device **10** illustrated with reference to Figures 1 to 8.

A typical operation of the combined device **10, 110** involves the following succession of steps: The case **12, 112** is mounted for example on a tractor and in a horizontal position respectively with the slit **27** closed and the grid **20** stopped or conveyor belts **156** and **158** stopped, the pulling of the net is carried out using the wheels **36** to detach the olives from the net. It is also conceivable to provide a slit to cover the conveyor belt system in relation to the case. In this regard, one end of the net is arranged inside the harvest case **12, 112,** the other end will be passed inside the two wheels **36** driven by a hydraulic motor (not shown). The pulling of the net will allow the olives to progressively accumulate and fall into the case **12, 112.**

Once the further harvest-loading operations have been completed, the supplementary wall **23, 123** is raised, which will prevent the olives from escaping during the tilting of the case **12, 112** from the same. The slit **27** (first exemplary embodiment of the defoliation system) is opened and the conveyor belts **156, 158** are operated (second exemplary embodiment of the defoliation system). At this point, other controls are also operated that will activate the fan **16, 116,** the grid **20** (with back and forth movement to move the olives and the leaves) or the drum **160** and the tilting of the case **12, 112** to slide the olives also along the chutes 14**a, 14b; 114a, 114b** towards the defoliation system. In the drum version and in the roller version, the case will preferably already have to be inclined first in order to bring the conveyor belt into a horizontal position. The drupes and leaves will move under the force of gravity towards the grid **20** or the conveyor belts **156, 158** and the drum **160,** which with their movement move and separate olives and leaves in the compartment **41** of the defoliation system. During defoliation, the drupes and leaves will encounter a lateral air flow that will move the leaves away, while the olives will fall through their respective openings (possibly equipped with grids) **19, 119** into the bin **50.** Once the olives have been defoliated and harvested, the case **12, 112** is disassembled from the elevator **44, 46,** the fork **42** is tilted into a horizontal position and the bins **50** are loaded to transport the olives to the oil mill. Next, in the case **12, 112** the nets **54.x** can be rewound on respective rods **52.x.**

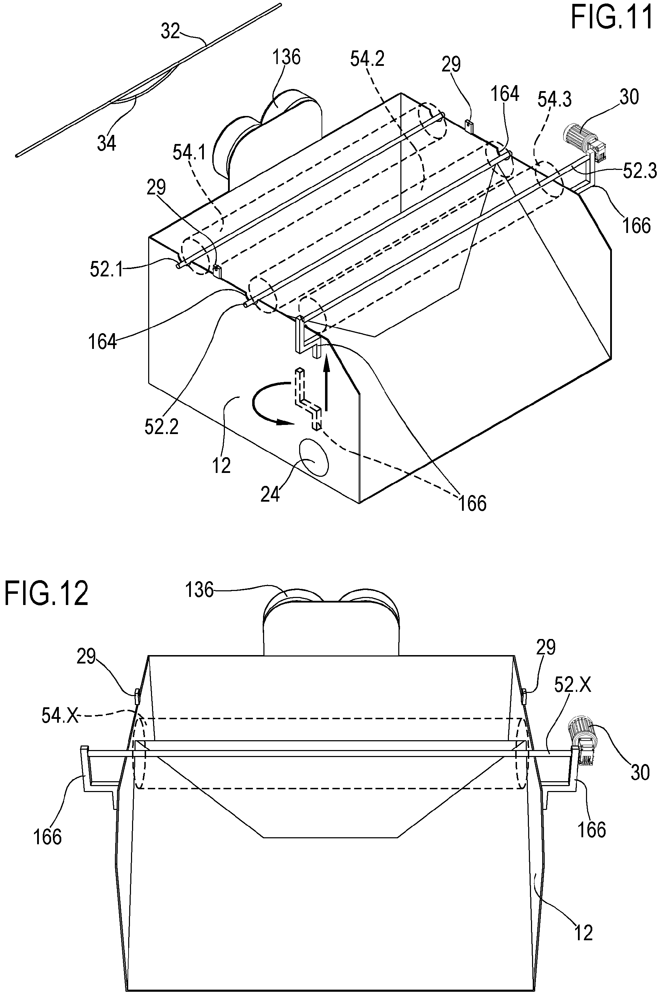

Figures 11 and 12 show two different perspective views of the case as represented in Figures 3 and 4 integrated with a net spreading-net winding system with extendable arms in the front of the case. Compared to the previous version, i.e. the first winding system, the case **12** has been integrated with an optional system for spreading and winding the net before and after the olive harvest respectively. The rod **32** with the arc **34** has been removed from the seats **29.** In order not to obstruct the space of the inside of the case, the wheels **136** have been brought into an upright position with a mechanism not represented but easily identifiable by a person skilled in the art. There were recesses **164** in opposite positions to accommodate the rods **52.1, 52.2** carrying the nets **54.1, 54.2.** In addition, there are two "Z"-shaped arms **166** fixed laterally on the outer walls of the case **12.** The dotted shape represents the arms **166** in retracted form during olive harvesting and defoliation, the full shape represents the arms **166** in extracted form before and after harvesting and defoliation. With a movement **1** the arm **166** is turned 90° outwards, with a movement **2** it is raised above the upper edges of the case **12.** The motor **30** of Figure 4 is fixed on one of the arms **166** so as to be able to rotate an inserted rod **52.3.** If the rod **52.3** carries a net **54.3** at the beginning of the processing, an operator can easily spread it (with the aid of the motor **30)** below the plants; if the rod **52.3,** on the other hand, does not have a net, it can be rotated to wrap a net **54.3** at the end of the processing. In this way, all the nets found on all the rods **52.x** located in the variable number of recesses **164** can first be laid to start the harvest. Subsequently, all the rods **52.x** are removed and the arms **166** are retracted and the wheels **136** are bent in an essentially horizontal position for loading the olives into the case **12.** When the harvest is complete, the wheels **136** are again brought to a vertical position, the arms **166** are extracted, a rod **54.3** is positioned between them and a net **54.3** is wound, the rod with a wound net is moved into two opposite recesses **166,** and the winding of all the nets positionable on the case **12** is repeated. The height of the extracted arms **166** is chosen such that the roller (composed of the rod with the wound net) is contained between the side walls of the case **12.** In this way, the net during rewinding (end of processing) is channelled evenly by the side walls. The rods **52.x** advantageously all have a length that makes them protrude beyond the side walls of the case **12** inserted in the appropriate recesses **164.** In other words, the rods **52.x** on which the net **54.x** is wound maintain at their ends a free portion without net that allows the same rod to be replaced. A certain number of recesses **164** provide space to hold x number of nets at the upper part of the case **12.** The net-stretching system is easily maintained by keeping the two seats **29,** where an inserted rod can help the stretching of the net before inserting it into the gripping device **136.** At least three elastic bands attached to the rod make it possible to secure the net before rewinding it without knotting it. When the net is laid, a simple pull will detach the net from the rod.

The second winding system provides that the pair of wheels can be folded into a vertical position, and extendable/retractable arms are provided for spreading the net at the start of processing and winding it at the end. Preferably, the respective motor **30** is the same as the net-stretching system that is unhooked and applied to the net spreading-net-winding system. The integrated case can be combined with any of the defoliation systems shown here and of course also with the elevator system.

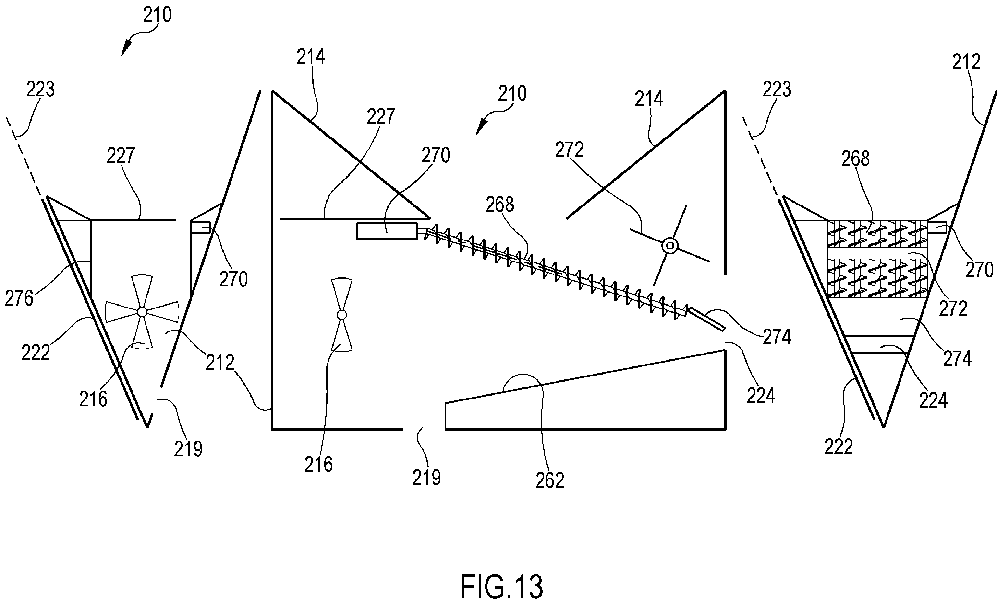

Figure 13 shows in several sectional views a detail of a third embodiment example of a defoliation system of a combined device for the harvest, defoliation and transport of olives traditionally harvested with a net. The centre view is a front view, the left and right views are seen from the left and right side of the combined device i.e. they correspond to the centre view turned 90° in two different directions. Note, as in the other two embodiments of the defoliation system, an inclined wall **222** and the corresponding supplementary wall **223,** the chute walls **214** for directing the olives towards the defoliation system and parts of the case **212** with an outlet **219** for the olives after separation of the leaves. A movable slit **227** makes it possible to separate the defoliation unit from the rest of the case **212.** A plurality of preferably helical rollers are provided inclined parallel to each other **268** whose rotation is driven by a motor **270.** The rollers **268** are inclined towards an opening **224** for the outlet of the leaves. An optional small chute **274** at the end of the rollers **268** helps to remove the leaves. The olives fall between the rollers **268** on an inclined plane **262** and move towards the outlet **219.** The fan **216** lifts leaves passed between the rollers **268** and conveys them towards the opening **224.** The paddle roller **272** serves to move branches or twigs from the rollers **268** toward the chute **274** and the opening **224.**

The device **16, 116, 216** producing the air flow can be of various kinds and is easily identifiable among devices known to the person skilled in the art, such as for example simple fans. While the net is being pulled, advantageously, the rod **32** is rotated not towards the wheels **36** or any other gripping device of the net but in the opposite direction.

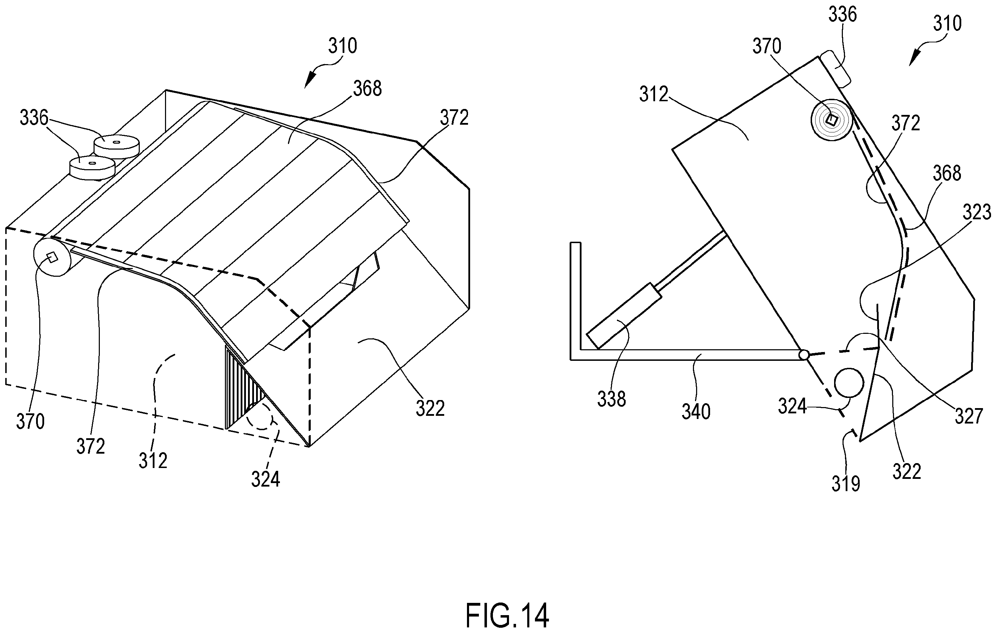

Figure 14 shows, in two views, a further exemplary embodiment of the combined device **310** according to the invention. On the left, a perspective view is shown; on the right, a lateral sectional view. The case **312,** situated on the support **340,** is equipped with a front wall **322** beneath which is located the outlet **324** for the leaves of a leaf separation system. A slit **327** and an opening **319** can also be seen, serving functions previously described for analogous elements. In cases of important inclinations of the case **312** by means of a piston motor **338,** the front wall **322** and the supplementary wall **323** may not be sufficient to contain the harvested material. For this purpose, a roll-up wall **368** is provided, which can be extended from and wound onto the rod **370,** which is rotatable and supportable on two lateral guides **372.** The roll-up wall can overlap the supplementary wall **323** or even the front wall **322** to close the case **312** and prevent harvested material from spilling out. Compared to the wheels **336** used to pull the net, the rod **370** with the roll-up wall **368** is slightly offset and positioned at a slightly lower level, so as not to obstruct the net pulling operation. The position of the roll-up wall **368** along the side walls of the case **312** may vary and is determined by the desired extent of closure of the case **312.**

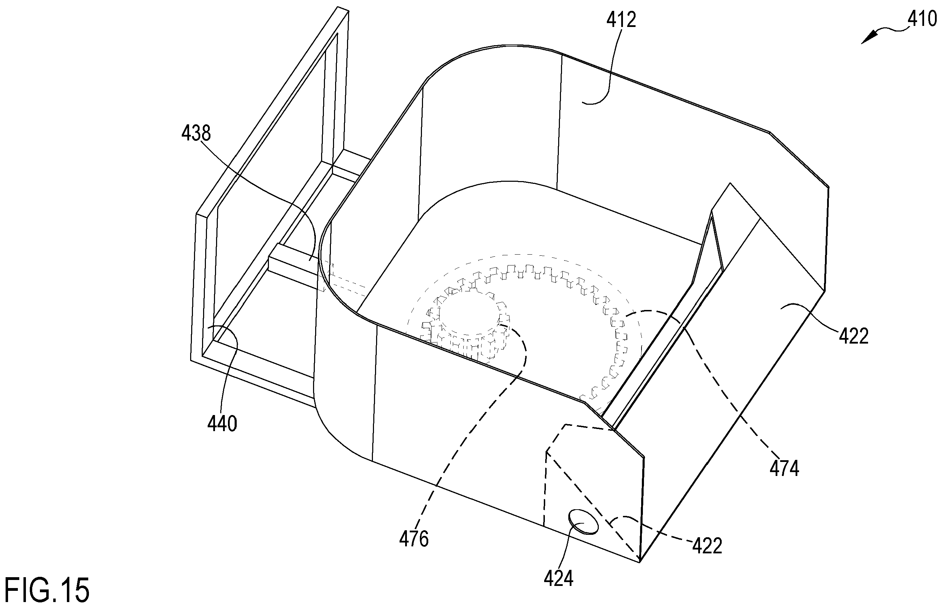

Figure 15 shows a perspective view of a combined device **410** according to the invention, comprising a rotation system for the case **412** mounted on the support **440.** Also visible are the outlet **424** for the leaves from the defoliation system and the front wall **422.** Under the bottom of the case **412,** a toothed ring gear **474** and a pinion gear **476** are provided, enabling the rotation of the case **412** by up to 180°. A hydraulic cylinder **438** serves to tilt the case **412** with respect to the support **440.**

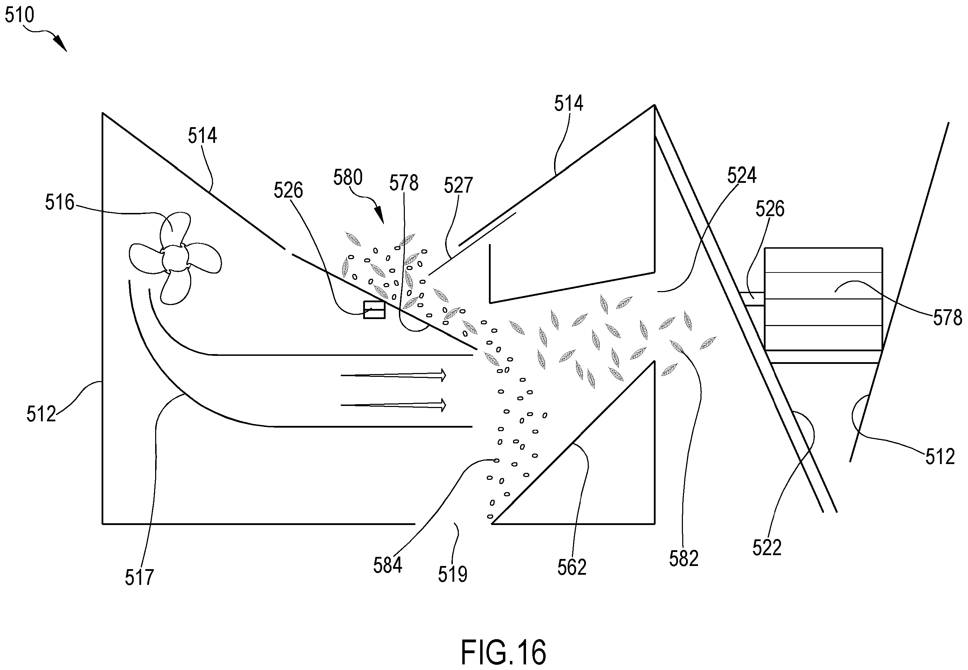

Fig. 16 illustrates a fourth embodiment example of the defoliation system in two sectional views, rotated 90° relative to each other. The combined device **510** comprises the case **512** and, instead of a grid that can be passed through by olives and/or leaves, a plate **578** (or alternatively a very fine mesh grid that cannot be passed through by olives and/or leaves) that can be set into vibration by a motor **526.** A slit **527** allows the compartment containing the defoliation system to be closed. The mixture **580** of fruit and leaves falls onto the vibrating plate **578** and slides towards the air flow **517** created by the fan **516,** which pushes the lighter leaves **582** towards the outlet **524,** while the fruit **584** falls onto an inclined chute **562** and exits through an opening **519.** The front wall is designated **522.**

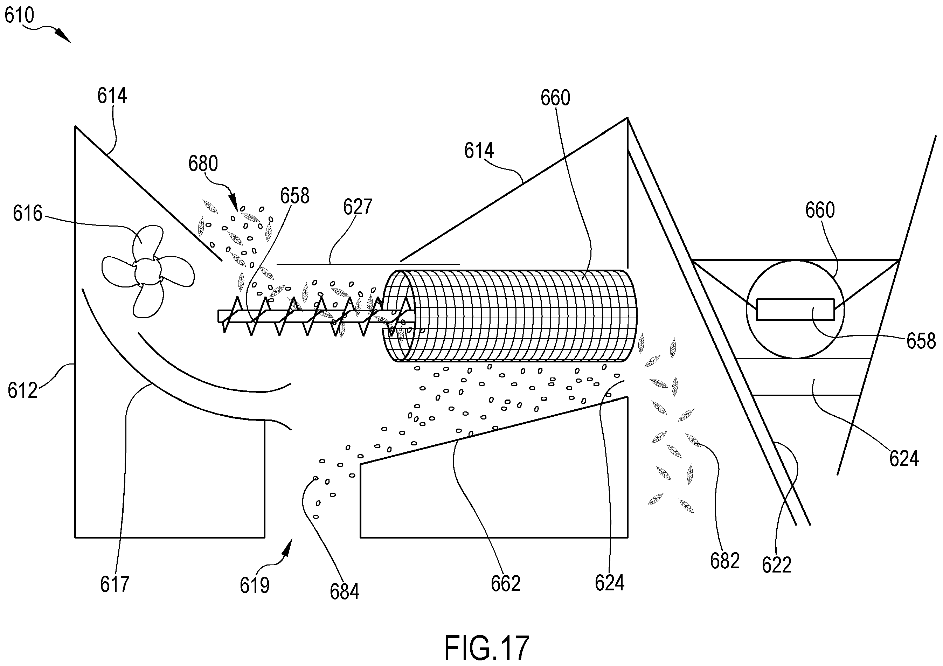

Fig. 17 illustrates, as an alternative to the second embodiment example, a fifth embodiment example of the defoliation system **710** with a single screw conveyor in two sectional views, rotated 90° relative to each other. The variant was created primarily to save space. The combined device **610** provides a drum **660** in the case **612,** fed by a screw conveyor **658** or a conveyor belt, which is fed from above with a mixture of fruit and leaves **680** that are transported into the drum **660.** The system can be closed with a closure **627.** The fan **616** creates an air flow towards the drum **660** and pushes the leaves **682** towards the outlet **624.** The fruits **684** fall onto the inclined plane **662** and slide towards the opening **619.**

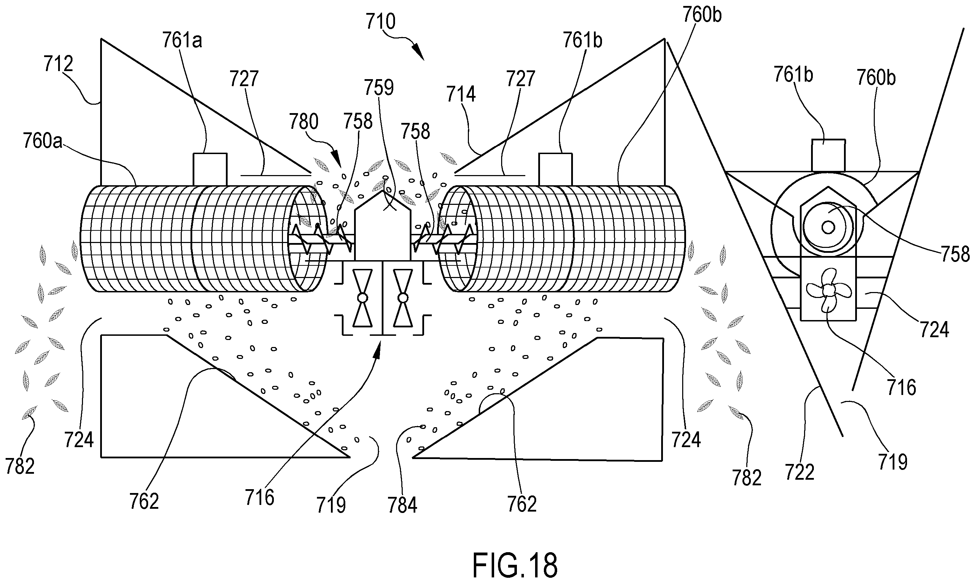

Fig. 18 illustrates a sixth embodiment example of the defoliation system in two sectional views, rotated 90° relative to each other. Two drums **760a** and **760b** can be seen in case **712** to speed up the defoliation process. Drums **760a** and **760b** are driven by two motors **761a** and **761b.**

Two inclined walls **714** cause the fruit and leaves **780** to slide onto a double screw conveyor system **758** driven by a motor **759,** which feeds the two drums **760a** and **760b.** A double fan system **716** pushes the leaves **782** towards the two outlets **724,** while the fruit **784** leaves the case **712** through the central opening **719,** guided by the inclined planes **762.**

During implementation, further modifications or embodiment variants not described herein may be made to the combined device, process, transport system and uses that are the object of the invention. If such modifications or such variants should fall within the scope of the following claims, they should all be considered protected under the present patent.

## Claims

1. A combined device (10; 110; 210; 310; 410; 510; 610; 710) for harvesting and defoliating olives, or alternatively dried oily fruit, such as hazelnuts, pistachios or almonds, comprising:
(a) a support (40; 340; 440) and a case (12; 112; 212; 312; 412; 512; 612; 712) mounted on said support (40; 340; 440) wherein said case (12; 112; 212; 312; 412; 512; 612; 712) has a bottom (21), two side walls, a rear wall and a front wall (22; 122; 222) inclined with respect to the bottom (21), wherein the inclination with respect to the bottom (21) preferably corresponds to an angle of 45° or less;
(b) a gripping device (36; 136; 336) for pulling a net through it preferably arranged on the upper edge of said rear wall;
(c) optionally, a rod (32; 52.x) mounted, preferably in a rotatable manner, transversely to said two side walls;
(d) a supplementary wall (23; 123; 223; 323) which is in a first position at least partially overlapping with/inserted into said inclined front wall (22; 122; 222; 322; 422; 522; 622; 722) and which in a second position can be positioned as an extension of said front wall (22; 122; 222; 322; 422; 522; 622; 722) inclined towards the inside of said case (12; 112; 212; 312; 412; 512; 612; 712); and/or
an upper closure (368) suitable for at least partially closing the case (312) and, when in the closed state, representing an extension of the inclined front wall (322) or the supplementary wall (323), if present;
(e) in a compartment (41) located between said inclined front wall (22; 122; 222; 322; 422; 522; 622; 722) and said bottom (21), a system for defoliating olives or oily dried fruit, wherein the compartment (41) is preferably separable from the rest of said case (12; 112; 212; 312; 412; 512; 612; 712).

2. The combined device (10; 110; 210; 310; 410; 510; 610; 710) according to claim 1, **characterized in that** said defoliation system comprises:
(A) in a first variant:
(e-1) a grid (20) connecting the inclined front wall (22) to the bottom (21) of the case (12), wherein the grid (20) optionally is oscillating;
(e-2) an element (16) for producing an air flow preferably arranged at one end of said compartment (41);
(e-3) a tubular or funnel-shaped element (24) or a hole connected to the outside of the case (12) and preferably arranged at the other end of said compartment (41);
(e-4) an opening (19) preferably applied in said bottom (21) of said case (12) within said compartment (41); or
(B) in a second variant:
(e-i) a transport system (156, 158; 658), preferably arranged at the height of the upper edge of the inclined front wall (122; 622);
(e-ii) a rotatable drum (160; 660) with a lattice wall placed below the transport system (156, 158; 658) and feedable therefrom, wherein the drum (160; 660) is open at its ends, one end of which is connected to the outside;
(e-iii) an element for producing an air flow (116; 616) preferably placed on one end of said compartment and suitable for sending the air flow into the drum (160; 660) and preferably under the drum (160; 660);
(e-iv) an opening (119; 619) preferably applied in said case bottom (112; 612) within said compartment; or
(C) in a third variant:
(e-a) a plurality of preferably helical rollers parallel to each other and rotatable (268), preferably arranged at the height of the upper edge of the inclined front wall (222), wherein the rollers (268) are inclined towards an outlet (224) connected to the outside of the case (212);
(e-b) optionally a rotatable paddle wheel (272) positioned so that branches and twigs can be removed from the lower end of the plurality of rollers (268) towards the outlet (224);
(e-c) an element (216) for producing an air flow suitable for sending an air flow below the plurality of rollers (268) towards the outlet (224);
(e-d) an opening (219) preferably applied in said bottom of said case (212) within said compartment; or
(D) in a fourth variant:
(d-a) a double screw unit (758) or double conveyor belt unit that are movable in opposite senses but arranged along the same direction;
(d-b) two rotatable drums (760a, 760b) with lattice walls placed at the two ends of the double screw unit (758) or double conveyor belt unit;
(d-c) an element for producing an air flow (716) suitable for pushing air in the direction of the two drums (760a, 760b) and placed under the double screw unit (758) or double conveyor belt;
(d-d) two side outlets (724) in the case in which the two drums (760a, 760b) terminate and which have a larger cross-sectional area than the two drums (760a, 760b);
(d-e) an opening (719) in the bottom of the case (712); or
(E) in a fifth variant:
(e-a) an inclined plate (578), optionally vibrating, which extends one of two inclined side walls (514) protruding towards the inside of the case (512);
(e-b) preferably a slit (527) suitable for closing the distance between the inclined plate (578) and the lower end of the inclined side wall (514) not extended by an inclined plate;
(e-c) an element for producing an air flow (516) suitable for directing the air flow (517) towards the material that falls from the inclined plate (578) during use;
(e-d) at least one side outlet (524) in the case (512) in which said air-producing element (516) is suitable for pushing the air towards said at least one outlet (524);
(e-e) an opening (519) in the bottom of the case (512).

3. The combined device (110; 610) according to claim 2, **characterized in that** (α) said transport system of variant (B) comprises a first conveyor belt (156) or screw conveyor system, which acts as an at least partial separator between said compartment and the rest of the case (112) and a second, shorter conveyor belt (158) or screw system which is arranged partially underneath said first conveyor belt (156) or screw system and protrudes therefrom, wherein said second conveyor belt (158) or screw system is advanceable in the direction of said drum (160) and said first conveyor belt (156) or screw system is advanceable in the opposite direction; or that
(β) said transport system of variant (B) comprises a single conveyor belt or a single screw conveyor (658) that feeds said drum (660) and protrudes at least partially into said drum (660); and preferably a slit (627) that separates said compartment from the rest of the case (612).

4. The combined device (110; 610) according to claim 2 or 3, **characterized in that** in the variant (B) below the drum (160; 660) and in the variant (C) below the plurality of rollers (268) an inclined plane (162; 262; 662) is arranged which extends towards said opening (119; 219) and that variant (D) further comprises (d-f) two planes (762) located respectively below said drums (760a, 760b) and inclined towards said opening (719), and that variant (E) also comprises (e-f) at least one plane (562) located below said inclined plate (578) and inclined towards said opening (519).

5. The combined device (10; 110; 210; 310; 410; 510; 610; 710) according to any one of the preceding claims, **characterized by** further comprising:
(f) mounted on the side walls of said case (12) retractable and removable arms (166) configured to be able to accommodate in the extracted position transversely to the side walls of said case (12) a rod (52.x) wherein one of said arms (166) can preferably be provided with a motor (30) for driving said rod (52.x);
(g) optionally, on the upper edges of the side walls of said case (12), one or more pairs of recesses (164) on opposite edges to accommodate rods (52.x); and
(h) optionally, a lifting mechanism to orientate the gripping device (136).

6. The combined device (10; 110; 210; 310; 410; 510; 610; 710) according to any one of claims 1 to 4, **characterized in that** said rod (32: 52.x) is mounted translatably along the side walls of the case (12; 112).

7. The combined device (10; 110; 210; 310; 410; 510; 610; 710) according to any one of the preceding claims, **characterized in that** it further comprises an elevating element in turn comprising two frames (44, 46) which are in a first position at least partially overlappable and in a second position positionable one above the other wherein said support (40) of said case (12; 112) is fixable/fixed by means of first fixing means (47) on the liftable frame (44) which is further provided with a support (42), in particular a fork, which is both positionable in an essentially coplanar form with respect to the frame (44) on which it is fixed and tiltable/tilted with respect to its frame (44), in particular by about 90°.

8. The combined device (10; 110; 210; 310; 410; 510; 610; 710) according to any of the preceding claims, **characterized in that** chutes (14a, 14b; 114a, 114b; 214; 514; 614; 714) are provided on the side walls for channelling olives or oily dried fruit and leaves towards the defoliation system **and in that** it further comprises a closing element (27; 227; 527; 627; 727) for separating said defoliation system and the respective compartment from the rest of the case (12; 112; 212)

9. The combined device (10; 110; 210; 310; 410; 510; 610; 710) according to any one of the preceding claims **characterized in that** said case (12; 112; 212; 312; 412; 512; 612; 712) is tiltable with respect to said support (40; 340; 440).

10. The combined device (10; 110; 210; 310; 410; 510; 610; 710) according to any one of the preceding claims **characterized in that** it further comprises a mechanism (474; 476) to rotate said case (412).

11. The combined device (10; 110; 210; 310; 410; 510; 610; 710) according to any of the preceding claims, **characterized in that** said upper closure (368) is a roll-up wall arranged transversely to said side walls, in particular in the area of the rear wall of the case (312).

12. The combined device (10; 110; 210; 310; 410; 510; 610; 710) according to any of the preceding claims, **characterized by** further comprising a shelling system.

13. The combined device (10; 110; 210; 310; 410; 510; 610; 710) according to any of the preceding claims, **characterized in that** said supplementary wall (23; 123; 223; 323) is inclinable/inclined with respect to the inclined front wall (22; 122; 222; 322; 422; 522; 622).

14. A transport system comprising said combined device (10; 110; 210; 310; 410; 510; 610; 710) and a towing vehicle (48), preferably connected in a reversible manner.

15. A process for harvesting and defoliating olives, or alternatively oily nuts, such as hazelnuts, pistachios or almonds, comprising the following steps:
(I) provision of a combined device (10; 110; 210; 310; 410; 510; 610; 710) according to any one of the preceding claims;
(II) harvesting olives or oleaginous nuts on a net arranged under an olive tree or a plant producing oily dried fruit, wherein the net is preferably arranged with said combined device (10; 110; 210; 310; 410; 510; 610; 710), preferably as defined in claim 5, or manually;
(III) pulling the net through the gripping device (36; 336) for pulling a net so as to pour the olives or oily dried fruit into the case (12; 112; 212; 312; 412; 512; 612; 712), preferably by separating the compartment (41) from the rest of the case (12; 112; 212; 312; 412; 512; 612; 712) and preferably with the case (12; 112; 312; 412; 512; 612; 712) in a horizontal position;
(IV) extraction of the supplementary wall (23; 123; 223; 323) as an extension of the inclined wall (22; 122; 222; 322; 422; 522; 622; 722) and/or closing of the upper closure (368);
(V) tilting of the case (12; 112; 312; 412; 512; 612; 712);
(VI) opening of the compartment (41) when it is closed and operation of the defoliation system with ejection of the leaves (582; 682; 782) and collection of the olives (584; 684; 784) or oily dried fruit preferably in bins (50) placed below the opening (19; 119; 219; 319; 519; 619; 719); and optionally
(VII) disassembling of the case (12; 112; 312; 412; 512; 612; 712) from the support (40; 340; 440) and, if present, tilting of the holder (42), in particular of the fork, and positioning of at least one bin (50) on the support (42) and preferably transport of said at least one bin (50) on a trailer and/or to the oil mill;
and optionally
(VIII) winding the net (54.x) on a rod (52.x).
